# EUROPÄISCHE PATENTSCHRIFT

(11) **EP 0 539 539 B1**
(45) Veröffentlichungstag und Bekanntmachung des Hinweises auf die Patenterteilung: **11.10.1995**
(21) Anmeldenummer: 92908860.7
(22) Anmeldetag: 25.04.1992
(51) Int. Cl.: F01L 1/34, F16D 3/10

(54) **VORRICHTUNG ZUR VERSTELLUNG DER DREHWINKELZUORDNUNG EINER NOCKENWELLE ZU IHREM ANTRIEBSELEMENT**
DEVICE FOR ADJUSTING THE ANGLE OF ROTATION BETWEEN A CAMSHAFT AND ITS DRIVE
DISPOSITIF DE REGLAGE DE L'ANGLE DE ROTATION D'UN ARBRE A CAMES PAR RAPPORT A SON ELEMENT D'ENTRAINEMENT

(30) Priorität: 17.05.1991 DE 4116169
(43) Veröffentlichungstag der Anmeldung: 05.05.1993
(73) Patentinhaber: ROBERT BOSCH GMBH, 70442 Stuttgart (DE)
(72) Erfinder: LINDER, Ernst, D-7130 Mühlacker (DE)
(86) Internationale Anmeldenummer: DE9200334
(87) Internationale Veröffentlichungsnummer: WO9220906

(56) Entgegenhaltungen:
- EP-A- 0 388 244
- DE-A- 3 929 621
- DE-A- 4 032 586

## Beschreibung

Die Erfindung betrifft eine Vorrichtung zur Verstellung der Drehwinkelzuordnung einer Nockenwelle wie im Oberbegriff des Anspruchs 1 angegeben.

Bei einer aus der EP-A-0 163 046 bekannten Verstellvorrichtung sind zwei auf einem Durchmesser eines mit der Nockenwelle verbundenen Teils angeordnete hydraulische Stellmotoren vorgesehen, die jeweils mit einem Stellkolben ausgerüstet sind, der über eine Rolle auf eine Rampe wirkt, die auf einem das mit der Nockenwelle verbundene Teil radial umgreifenden Antriebszahnrad angeordnet sind. Beide Stellmotoren werden separat mit Druck beaufschlagt und die Druckeinwirkung wird durch separate Ventile geregelt. Die Stellmotore werden dabei durch eine Ventilanordnung so angesteuert, daß der nach außen bewegte Kolben des einen Stellmotors mit Druck beaufschlagt wird und der Arbeitsraum des anderen, gegenüberliegenden Stellmotors entlastet ist, so daß der Kolben dieses Stellmotors der Rampe folgend ausweichen kann. Bei ungleichem Druck in den Stellmotoren verschiebt sich der Stellkolben und die Rolle wirkt sowohl auf die Rampe des Antriebsrades als auch auf die Welle. Diese Winkelverstellung kann in beiden Richtungen erfolgen.

Die in einem Verbrennungsmotor zu Schmierungszwecken vorhandene Öldruckquelle kann zwar zur Verstellung der Nockenwelle als Antriebsmittel eingesetzt werden, sie erzeugt aber nur einen relativ niedrigen Druck und ist auch hinsichtlich des Fördervolumens/Zeiteinheit begrenzt. Zudem ist der zusätzliche Druckmittelverbrauch erheblich, wodurch der Einsatz einer größeren Öldruckquelle erforderlich ist. Eine getrennte Hochdruckpumpe andererseits erfordert auch wiederum einen höheren Aufwand und Energieverbrauch. Darüberhinaus ist die vorgeschlagene Einrichtung auch dahingehend aufwendig, da zur Ansteuerung der beiden Stellmotore zwei getrennte Magnetventile oder ein Dreistellungsventil zum Einsatz gebracht werden müssen.

Durch die EP-A1-0 388 244 ist eine Verstelleinrichtung der gattungsgemäßen Art bekannt. Dort erfolgt die Verstellung der Nockenwelle relativ zu ihrem Antrieb durch eine Verstelleinrichtung, die sich lediglich als Stellantrieb der Drehmomentenschwankungen der Nockenwelle bedient. Dabei werden die Arbeitskammern über das Steuerventil entweder miteinander verbunden oder voneinander getrennt. Zusätzlich ist auch eine Druckmittelversorgungsquelle vorgesehen, durch die die Arbeitsräume bei Druckmittelverlust wieder aufgefüllt werden können.

Eine solche Verstelleinrichtung hat den Nachteil, daß nicht in allen Betriebsbereichen ein ausreichend hoher Grad an Drehmomentenschwankungen an der Nockenwelle vorliegt. Insbesondere fehlen solche Schwankungen bei niedriger Drehzahl. Somit genügt diese bekannte Verstelleinrichtung nicht in allen Betriebsbereichen der Brennkraftmaschine den Anforderungen.

Es ist andererseits durch die DE-A1-39 29 621 eine Verstelleinrichtung bekannt, die eine Hydraulikpumpe aufweist, deren Druckseite mit einem Speicher verbunden ist, aus dem ein Stellmotor mit Druckmittel zur Verstellung der Relativstellung der Nockenwelle zu ihrem Antrieb versorgt ist. Der Stellmotor hat dabei einen zwei Arbeitskammern trennenden Stellkolben. Die Arbeitskammern werden über ein Steuerventil so angesteuert, daß die eine der Arbeitskammern aus dem Speicher mit Druckmittel versorgt werden und die andere der Arbeitskammern entlastet wird zur Verstellung in der einen Richtung und umgekehrt zur Verstellung in der anderen Richtung. Diese Einrichtung hat den Nachteil, daß die hydraulische Pumpe ständig fördert und daß geförderte Medium durch die Steuervorgänge laufend wieder zum Druckmittelvorrat zurücklaufen muß. Dies bedingt eine hohe Antriebsleistung und einen hohen Druckmittelbedarf.

Der Erfindung liegt die Aufgabe zugrunde, eine Vorrichtung anzugeben, welche bei einem minimalen Druckmittelbedarf eine kennfeldabhängig stetige, also schnelle Früh- oder Spätverstellung der Nockenwelle relativ zum Nockenwellenantriebsrad auch im unteren Drehzahlbereich ermöglicht.

Diese Aufgabe wird mit den kennzeichnenden Merkmalen des Anspruchs 1 gelöst.

Die Erfindung beruht auf der Erkenntnis, daß das wechselnde Drehmoment an einer Nockenwelle relativ zum Nockenwellenantriebsrad für eine Früh- oder Spätverstellung im oberen Drehzahlbereich gut nutzbar ist, indem die durch die Drehmomentschwankungen entstehenden Druckspitzen als zusätzliche Druckquelle für Stellaufgaben verwendet werden. Im unteren Drehzahlbereich muß dagegen eine zusätzliche Hilfskraft eingesetzt werden, um die in diesem Drehzahlbereich auftretende Differenz zwischen den erforderlichen und der tatsächlich entstehenden Druckkraft infolge der Drehmomentschwankungen entsprechend auszugleichen, damit eine genügend schnelle Verstellung der Nockenwelle realisiert werden kann.

Die erfindungsgemäße Vorrichtung weist deshalb neben einem für die Verstellung notwendigen hydraulischen Stellmotor eine Zusatzpumpe auf. Durch diese Pumpe, die erfindungsgemäß als Kugelkolbenpumpe ausgeführt ist und, im Antriebssystem der Nockenwelle angeordnet, mit dem hydraulischen Stellmotor eine komplexe Einheit bildet, wird insbesondere im unteren Drehzahlbereich des Verbrennungsmotors eine zusätzliche Verstellkomponente erzeugt.

Nach einer bevorzugten Ausführungsform der Erfindung wird eine zweizylindrige Kugelkolbenpumpe mit Doppelhubkurve vorgesehen. Die Pumpe ist symmetrisch aufgebaut, so daß sich zwei Hübe je Umdrehung für jeden Zylinder des Verbrennungsmotors ergeben, womit in vorteilhafter Weise die Querkräfte auf die zu steuernde Nockenwelle vollständig ausgeglichen werden können.

Die Hubkurve der Kugelkolbenpumpe ist vorteilhafterweise oval, elliptisch, trochoid- oder sinusquadratförmig ausgeführt.

Die so integrierte und dadurch baulich sehr kompakt ausgeführte Kolbenpumpe ist elektromagnetisch steuerbar. Dazu ist in vorteilhafter Weiterbildung der Erfindung ein erstes Steuerventil für die zusätzliche Kolbenpumpe mit einem zweiten Steuerventil für Verriegelung von Arbeitskammern innerhalb des Stellmotors in einer gemeinsamen Steuereinheit kombiniert. Damit kann auch die Verstellung der Drehwinkelzuordnung zwischen Nockenwelle und Nockenwellenantriebsrad mit der Leistung der Pumpe im Bedarfsfall auf einfache Weise beeinflußt werden. In der Steuereinheit sind das erste und das zweite Steuerventil zusammengefaßt. Sie können deshalb vorteilhaft von einem Magneten gemeinsam betätigt werden.

Somit ergibt sich der Vorteil, daß für die erforderliche Drehwinkelverstellung zwischen Nockenwelle und Antriebsrad der Nockenwelle nur eine einzige Steuereinheit benötigt wird und nur ein Hydrauliksystem, nämlich der Schmiermittelkreislauf der Verbrennungskraftmaschine, erforderlich ist.

Um das notwendige hydraulische Zusammenwirken zwischen der zusätzlich integrierten Kugelkolbenpumpe und dem Stellmotor zur Verstellung der Nockenwelle zu gewährleisten, weist der Stellmotor erfindungsgemäß acht Arbeitskammern auf, die paarweise und symmetrisch zusammenarbeiten. Die Arbeitskammern sind Volumina, die in einem kreisförmigen Eingriffsbereich liegen, der zwischen Drehkolben des Stellmotors und Antriebsrad der Nockenwelle vorgesehen ist. Die Volumina der Arbeitskammern werden durch Freiräume gebildet, die zwischen in dem Eingriffsbereich angeordneten Verstellsegmenten bestehen. Die Verstellsegmente sind jeweils abwechselnd an der Innenseite des Nockenwellenantriebsrades und an der Außenseite des Drehkolbens des Stellmotors mittels Paßfedern befestigt.

Es ist erfindungswesentlich, daß zwei der acht Arbeitskammern des Stellmotors mit jeweils einer der beiden Druckkammern der Kolbenpumpe verbunden sind. Die beiden genannten Arbeitskammern des Stellmotors liegen sich diametral gegenüber. Gleichzeitig ist die Verbindungsleitung zwischen den beiden Arbeitskammern des Stellmotors und den Druckkammern der Kolbenpumpe mittels des ersten Steuerventils der gemeinsamen Steuereinheit mit dem Schmierölkreislauf verbindbar.

Zwei weitere der acht Arbeitskammern des Stellmotors sind belüftet, liegen sich diametral gegenüber und befinden sich jeweils neben den Arbeitskammern des Stellmotors, die mit den Druckkammern der verwendeten Kugelkolbenpumpe verbunden sind.

Diese Druckkammern werden zusammen mit den restlichen vier Kammern des Stellmotors von der vorgenannten Steuereinheit gesteuert.

Die restlichen vier Kammern sind in zwei Gruppen geteilt, wobei sich jeweils eine Zweiergruppe zwischen einer belüfteten Arbeitskammer und einer mit der Druckkammer der Kugelkolbenpumpe verbundenen Arbeitskammer des Stellmotors befindet. Die einzelnen Kammern der beiden Kammerpaare sind erfindungsgemäß durch eine Leitung jeweils paarweise miteinander über das zweite Steuerventil der Steuereinheit, mit der auch die Kugelkolbenpumpe gesteuert wird, hydraulisch verbindbar ausgebildet.

Im stromlosen Zustand der Magnetwicklung der Steuereinheit sind einerseits die Kammern der Kammerpaare jeweils gegeneinander über das zweite Steuerventil der Steuereinheit verriegelt und andererseits weisen die Verbindungsleitungen, die zwischen dem Stellmotor und der Kugelkolbenpumpe vorgesehen sind, jeweils über das erste Steuerventil der Steuereinheit eine Verbindung mit dem Schmiermittelkreislauf der Verbrennungskraftmaschine auf. Bei Ansteuerung der Steuereinheit wird über das zweite Steuerventil die Verriegelung zwischen den zwei Kammerpaaren des Stellmotors aufgehoben und gleichzeitig über das erste Steuerventil der Steuereinheit die Verbindung der Druckkammern der Kugelkolbenpumpe mit dem Schmiermittelzulauf unterbrochen. Erfindungsgemäß wird damit erreicht, daß die Kugelkolbenpumpe druckmäßig aktiv werden kann und daß zwischen den einzelnen zusammengehörenden Kammern der Kammerpaare unter Wirkung des Drehmoments an der Nockenwelle ein Austausch des Strömungsmediums (Schmiermittel) erfolgen kann. Der Verstellvorgang an der Nockenwelle ist eingeleitet.

Je nach Stellung der entsprechenden Steuernocke der Nokkenwelle am jeweiligen Ventilstößel des Einlaßventils des Verbrennungsmotors wird die Saug- oder die Druckwirkung der Kugelkolbenpumpe zur Früh- bzw. Spätverstellung genutzt. Die Strömungsrichtung in den dazugehörigen Kammerpaaren des Stellmotors kehrt sich dabei um.

Die Steuerung erfolgt erfindungsgemäß derart, daß die Kolbenpumpe nur bei Bedarf eine Frühverstellung der Nockenwelle im unteren Drehzahlbereich druckmäßig unterstützt, so daß eine höhere Leistungsausbeute des Motors erzielt werden kann. Dadurch können auch die Vorteile des Verstellerprinzips, das in der stetigen Verstellung und der damit realisierbaren inneren Abgasrückführung liegt,im unteren Drehzahlbereich genutzt werden.

Durch dieses Verstellungsprinzip können auch die Abgaswerte bzw. Leistungsparameter der Brennkraftmaschine erhebheblich verbessert werden. Das Drehmoment nimmt um 15% im unteren Drehzahlbereich zu und die NOₓ-und HC-Werte verringern sich um 40 bzw. 20%.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
Figur 1 einen Längsschnitt durch die erfindungsgemäße Verstelleinrichtung für Nockenwellen,
Figur 2 einen Querschnitt durch die erfindungsgemäße Verstelleinrichtung für Nockenwellen längs der Linie A..A,
Figur 3 einen Querschnitt durch die erfindungsgemäße Verstelleinrichtung für Nockenwellen längs der Linie B..B,
Figur 4 eine Teilansicht nach Figur 3 in Verbindung mit einem Ventilstößel nebst dazugehöriger Steuernocke,
Figur 5 eine Ansicht nach Figur 4 nach Weiterdrehung der Nockenwelle um 90°,
Figur 6 ein Druckdiagramm für den Stellmotor und die Zusatzpumpe in Korrespondenz mit dem dazugehörigen Verlauf der Steuerimpulse für die Steuereinheit, bezogen auf eine Nockenwellenumdrehung bei einem Sechszylinder-Motor.

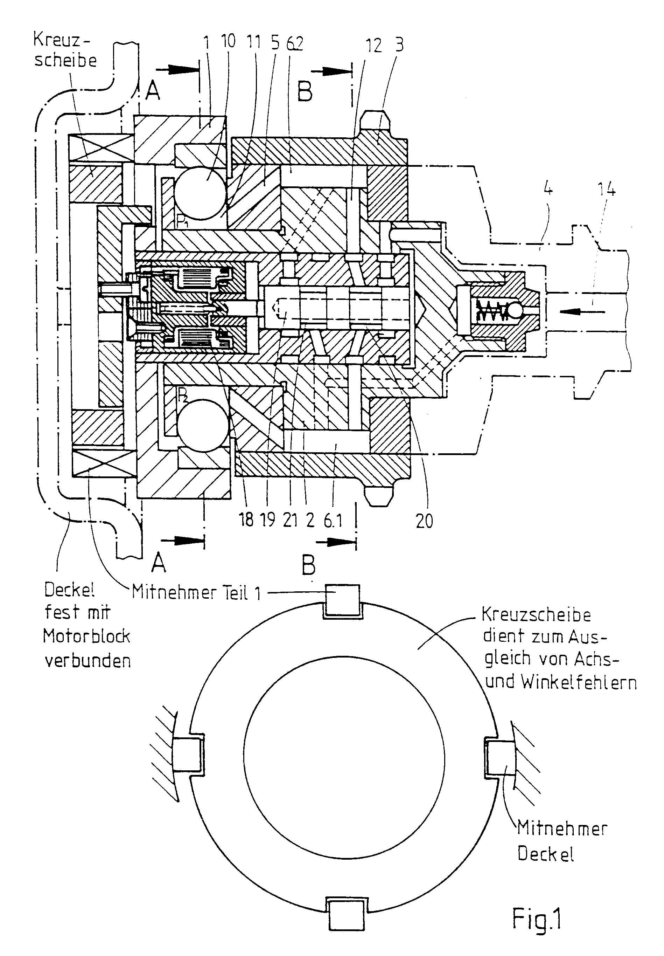

In dem Längsschnitt nach Figur 1 ist der Aufbau eines bevorzugten Ausführungsbeispiel der erfindungsgemäßen Verstelleinrichtung für Nockenwellen dargestellt. Die Verstelleinrichtung besteht aus einem Stellmotor 2 und einer zusätzlichen Pumpe 1, die zusammen mit einer Steuereinheit 19 an dem Ende der Nockenwelle 4 als komplexe Baugruppe angeordnet sind. Die hydraulische Kopplung zwischen der zusätzlichen Pumpe 1 und dem Stellmotor 2 erfolgt über zwei Verbindungsleitungen 5. Dadurch wird eine Verbindung zwischen den beiden Druckkammern 11 der Pumpe 1 und der entsprechenden ersten bzw. zweiten Arbeitskammer 6.1 und 6.2 realisiert. Die für die gewünschte Wirkungsweise der Pumpe 1 erforderliche Verbindung mit dem Schmiermittelkreislauf der Verbrennungskraftmaschine erfolgt über die Verbindungsleitungen 12 im Zusammenwirken mit dem ersten Steuerventil 20 der Steuereinheit 19.

Die Steuereinheit 19 enthält erfindungsgemäß das erste Steuerventil 20 und ein zweites Steuerventil 21 zwecks Verbindung der Arbeitskammern 6.1 und 6.2. Die Steuerventile 20 und 21 werden durch einen Elektromagneten 18 gemeinsam betätigt, um die Schaltfunktionen ausführen zu können, die für eine Winkelverstellung zwischen Nockenwelle 4 und Nockenwellenantriebsrad 3 erforderlich sind.

Der Vorteil der erfindungsgemäßen Verstelleinrichtung besteht neben ihrer Kompaktheit vor allem auch darin, daß die als einfache Kugelkolbenpumpe ausgeführte zusätzliche Pumpe 1 nur im Bedarfsfall über die Steuereinheit 19 zugeschaltet wird. Dadurch entfällt ein ständiges Arbeiten der Pumpe 1 gegen einen Überdruck. Dies bedeutet eine erhebliche Energieeinsparung, die ihren Niederschlag in einer höheren Leistungsausbeute des Verbrennungsmotors findet.

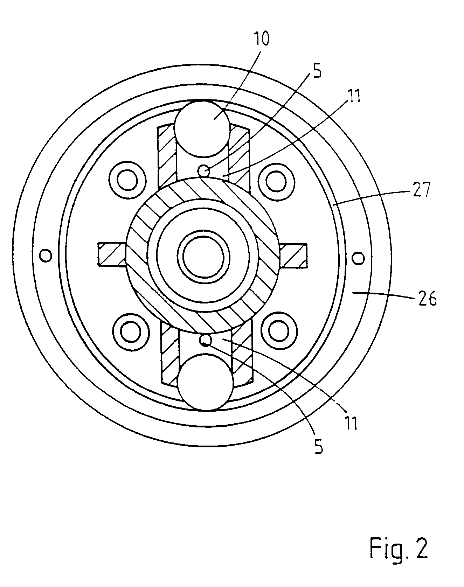

Der Aufbau der zusätzlichen Kugelkolbenpumpe 1 ist in Figur 2, die einen Querschnitt längs der Linie A...A nach Figur 1 zeigt, vereinfacht dargestellt. Es handelt sich bei einer bevorzugten Ausführungsform der Erfindung um eine Zweizylinderpumpe mit Doppelhubkurve in symmetrischer Anordnung. Dadurch ergeben sich pro Umdrehung jeweils zwei Hübe für jeden Zylinder der Verbrennungskraftmaschine, wobei aufgrund der Symmetrie mögliche Querkräfte auf die Nockenwelle vollständig ausgeglichen werden. Die als Kugel ausgebildeten Kolben 10 der Pumpe drehen sich mit der Nockenwelle 4 und rollen dabei auf einem Hubring 26, der durch eine in Fig. 1 näher dargestellte Kreuzscheibe gegen Verdrehen gesichert ist, ab. Durch eine nicht kreisförmig gestaltete Hubkurve 27 des Hubringes 26 erfolgt bei Drehbewegung der Nockenwelle 4 eine radiale Bewegung der Kugelkolben 10. Damit kann sich in den Druckkammern 11 der Zusatzpumpe 1 unter bestimmten Bedingungen ein Druck aufbauen, der für den Verstellvorgang ausnutzbar ist. Der Druck baut sich dann auf, wenn über das erste Steuerventil 20 der Steuereinheit 19 die Verbindung zum Schmiermittelkreislauf der Verbrennungskraftmaschine 14 unterbrochen worden ist. Der sich aufbauende Druck wird über die Verbindungsleitungen 5 zu den Arbeitskammern 6.1 und 6.2 des Stellmotors 2 geleitet und unterstützt damit den Verstellvorgang der Nockenwelle, der durch die Druckwirkung der relativ kleinen Drehmomentschwankungen bei niedrigen Motordrehzahlen eingeleitet wird.

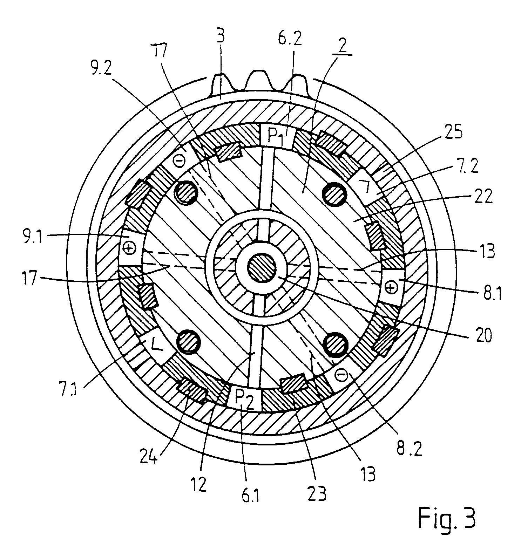

In Figur 3 ist der erfindungsgemäße Aufbau des Stellmotors 2 im Querschnitt (Schnitt längs der Linie B...B gemäß Figur 1) dargestellt. Die acht Arbeitskammern 6.1, 6.2, 7.1, 7.2, 8.1, 8.2, 9.1 und 9.2 liegen symmetrisch verteilt in einem kreisförmigen Eingriffsbereich zwischen Außenseite des Drehkolbens 22 des Stellmotors 2 und der Innenseite des Antriebsrades 3 der Nockenwelle 4.

Die Arbeitskammern sind abgeschlossene Volumina, die sich jeweils zwischen den in gleichen Abständen am Drehkolben 22 des Stellmotors 2 und am Nockenwellenantriebsrad 3 angeordneten Verstellsegmenten 23 befinden. Die Verstellsegmente 23 sind auf einfache Weise mittels Paßfedern 24 am Drehkolben 22 bzw. am Antriebsrad 3 der Nockenwelle 4 befestigt sind.

Die Arbeitskammern sind paarweise jeweils um 180° versetzt und bewirken dadurch eine vorteilhafte Reduzierung der Reibungskräfte beim Verstellvorgang. Auf diese Weise ist der Stellmotor 2 kompakt und vor allem kostengünstig herstellbar, da insbesondere die Paßfedern 24 und die Verstellsegmente 23 auch bei hoher Paßgenauigkeit preisgünstig zu produzieren sind.

Die Arbeitskammern 6.1 und 6.2 sind über die Leitungen 12, die durch den Drehkolben 22 des Stellmotors 2 führen, mit dem ersten Steuerventil 20 verbunden. Dies ist Voraussetzung dafür, daß im Zusammenwirken mit den Leitungen 5 (dargestellt in Figur 1) eine Verbindung zwischen dem Schmiermittelkreislauf der Verbrennungskraftmaschine 14 und den Druckkammern 11 der Zusatzpumpe 1 hergestellt werden kann, wenn die Steuereinheit 19 einen Schaltvorgang auslöst.

Die jeweils neben den mit der Zusatzpumpe 1 verbindbaren Arbeitskammern 6.1 und 6.2 angeordneten beiden Arbeitskammern 7.1 und 7.2 sind ebenfalls um 180° gegeneinander versetzt und werden erfindungsgemäß jeweils über im Nokkenwellenantriebsrad 3 vorhandene Bohrungen 25 belüftet.

Die restlichen vier Arbeitskammern 8.1, 8.2, 9.1 und 9.2 des Stellmotors 2 sind zu einem ersten und einem zweiten Kammerpaar zusammengefaßt, die sich um 180° versetzt diametral gegenüberliegen. Die einzelnen Arbeitskammern der Kammerpaare 8.1, 8.2 und 9.1, 9.2 sind miteinander durch die Verbindungsleitungen 13 und 17 hydraulisch gekoppelt. Im stromlosen Zustand der Steuereinheit 19 sind die Kammerpaare über das Steuerventil 21 gegeneinander verriegelt. Die Entriegelung der Kammerpaare erfolgt durch einen Schaltvorgang in der Steuereinheit 19, wenn eine Winkelversatzänderung zwischen Nockenwelle 4 und Nockenwellenantriebsrad 3 durch den Stellmotor 2 vorgenommen werden muß. In diesem Falle tritt das zweite Steuerventil 21 in Aktion (siehe Figur 1). Die einzelnen Kammerpaare 8.1, 8.2 und 9.1, 9.2 sind entsprechend der als vorteilhaft erkannten Symmetriebedingungen erfindungsgemäß jeweils zwischen einer belüfteten Arbeitskammer 7.1 oder 7.2 und einer mit einer der Druckkammern 11 der Zusatzpumpe 1 verbundenen Arbeitskammer 6.1 oder 6.2 in dem Eingriffsbereich zwischen Nockenwellenantriebsrad 3 und Drehkolben 22 des Stellmotors 2 angeordnet.

Mit Ausnahme der belüfteten Arbeitskammern 7.1 und 7.2 sind alle Kammern des Stellmotors 2 als Arbeitsmittel mit dem Schmiermittel des Schmiermittelkreislaufs der Verbrennungskraftmaschine 14 gefüllt.

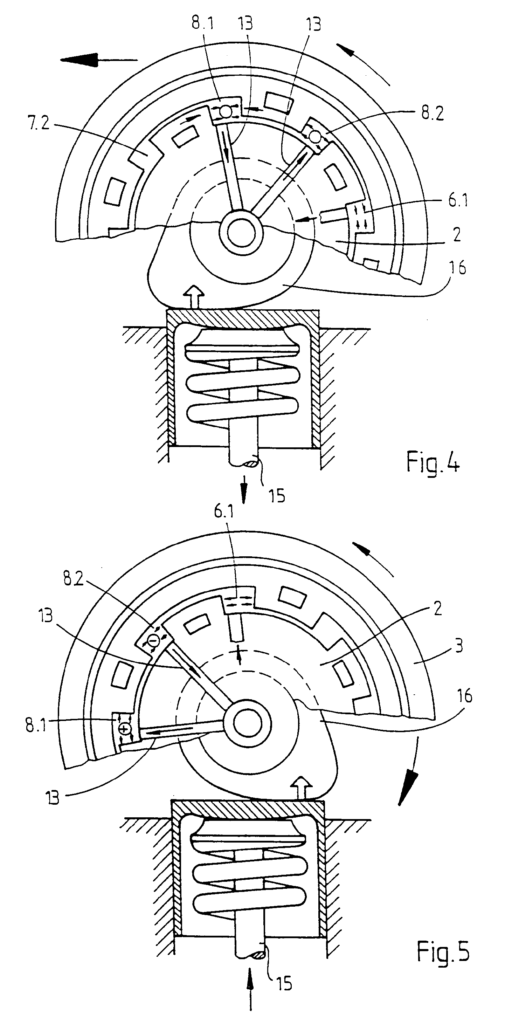

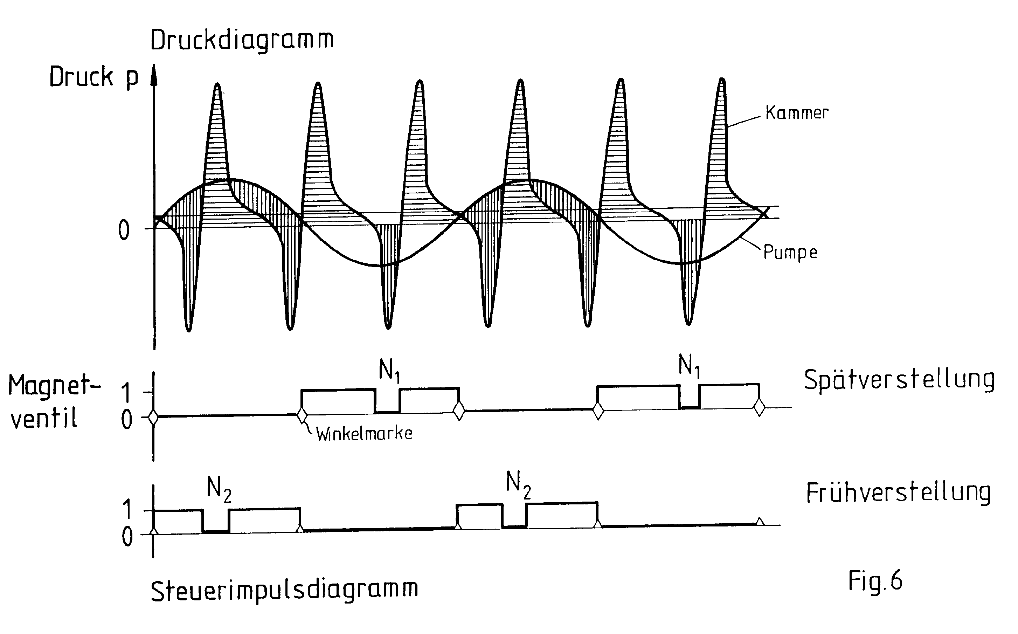

In den Figuren 4 und 5 sind jeweils eine Teilansicht des Stellmotors 2 in Verbindung mit einer beeinflußten Nocke 16 der Nockenwelle 4 und einem entsprechenden Einlaßventilstößel 15 der zu steuernden Verbrennungskraftmaschine dargestellt.

Figur 4 zeigt den Wirkungsmechanismus des Stellmotors 2 bei einem sich öffnenden Einlaßventil eines Zylinders der Verbrennungskraftmaschine. Die Steuereinheit 19 hat das erste und zweite Steuerventil 20 und 21 betätigt, wodurch die Arbeitskammerpaare 8.1, 8.2; 9.1, 9.2 entriegelt und die Arbeitskammern 6.1 und 6.2 (und damit auch die Druckkammern 11 der Zusatzpumpe 1) vom Schmiermittelkreislauf der Verbrennungskraftmaschine 14 getrennt sind. Der Stößel 15 des Ventils wird durch die Nocke 16 gegen die Wirkung der Ventilfeder getrieben. Im Stellmotor 2 strömt das Schmiermittel über das nicht dargestellte zweite Steuerventil 21 der Steuereinheit 19 von der Arbeitskammer 8.1 zur Arbeitskammer 8.2. Die Zusatzpumpe 1 unterstützt diesen Vorgang, indem sie aus der Arbeitskammer 6.1 des Stellmotors 2 Medium saugt. An der Nockenwelle 4 wird dadurch eine Verstellung nach "spät" vorgenommen.

Figur 5 zeigt die gleiche Anordnung, jedoch nach Weiterdrehung der Nockenwelle 4 um 90°. Das Einlaßventil führt eine Schließbewegung durch, d.h. der Ventilstößel treibt die Nocke 16. Hierbei erfolgt ein Überströmen des Schmiermittels aus der Arbeitskammer 8.2 über das Steuerventil 21 der Steuereinheit 19 zur Arbeitskammer 8.1. Die Zusatzpumpe 1 unterstützt diesen Vorgang durch eine entsprechende Pumpwirkung und fördert Schmiermittel in die Arbeitskammer 6.1. Es erfolgt eine Verstellung der Nockenwelle 4 nach "früh".

Die in den Figuren 4 und 5 nicht dargestellten Arbeitskammern 6.2 bzw. 9.1 und 9.2 unterstützen den Verstellvorgang des Stellmotors 2 in der vorab beschriebenen Form entsprechend und tragen damit in vorteilhafter Weise dazu bei, daß aufgrund dieser symmetrischen Arbeitsweise des Stellmotors 2 keine unerwünschten Querkraftwirkungen auf die Nockenwelle 4 entstehen.

Die für die Verstellstrategie der erfindungsgemäßen Stellvorrichtung erforderlichen Druckverhältnisse in den Kammerpaaren 8.1, 8.2 und 9.1, 9.2 und der Druckverlauf in der Zusatzpumpe 1 sowie die dazu korrespondierenden Steuerimpulsverläufe für die Steuereinheit 19 in Abhängigkeit von der Drehung der Nockenwelle 4 sind in Figur 6 für einen Sechszylinder-Motor als Diagramm dargestellt. Je nach Phasenlage der Einschaltperiode der Magnetwicklung 18 der Steuereinheit 19 ergibt sich durch Überlagerung des Drucks in den Kammern und der Druck- bzw. Saugwirkung der Zusatzpumpe 1 eine Frühverstellung (Pumpendruckwirkung) bzw. eine Spätverstellung (Pumpensaugwirkung) der Nockenwelle 4. Die gewünschte Phasenlage der einzelnen Druckverläufe kann durch entsprechende Justage des Hubringes 26 der Zusatzpumpe 1 eingestellt werden.

Es hat sich als vorteilhaft herausgestellt, die sich in den Drehwinkelbereichen N1 und N2 der Nockenwelle 4 ergebenden Drucküberlagerungen über die Steuereinheit 19 impulsmäßig zu blockieren, da sich im Bereich N1 eine nicht erwünschte Frühverstellung und im Bereich N2 im oberen Drehzahlbereich eine extrem hohe Druckbelastung der Kugelkolben 10 der Pumpe 1 ergeben.

Die Steuerimpulse zur Ansteuerung des Magneten 18 in der Steuereinheit 19 werden durch einen Winkelmarkengeber ausgelöst, der die Stellung der Nockenwelle 4 abtastet. Der Winkelmarkengeber ist an dem aus Kunststoff bestehenden Ventildeckel, der zur Befestigung des Magneten 18 an der Steuereinheit 19 dient, angebracht. Da der Winkelmarkengeber induktiv arbeitet, sind wesentliche Einzelteile der Zusatzpumpe 1, wie Hubringträger und Kreuzscheibe aus magnetisch nichtleitendem Material, z.B. V2A-Stahl, gefertigt.

## Patentansprüche

1. Verstelleinrichtung zur stetigen Verstellung der Drehwinkelzuordnung einer zur Betätigung von Gaswechselventilen einer Brennkraftmaschine dienenden Nockenwelle (4) relativ zu ihrem Antriebselement (3), mit einem Stellmotor, der wenigstens eine Paar von mit Hydraulikmedium gefüllte Arbeitskammern (8.1, 8.2, 9.1, 9.2) mit jeweils zwei relativ zueinander bewegbaren Wänden (23) aufweist, von denen jeweils die eine der Wände mit dem Antriebselement (3) der Nockenwelle und die andere der Wände mit der Nockenwelle (4) verbunden sind und die Arbeitskammern über ein Steuerventil (21) selektiv derart mit einander verbunden werden, daß unter Ausnutzung gerichteter Drehmomentbeaufschlagungen der Nockenwelle in einer Richtung oder einer entgegengesetzten Richtung die Arbeitskammern (8.1 und 8.2 bzw. 9.1 und 9.2) miteinander verbunden sind zur Vergrößerung des Arbeitskammervolumens der einen der Arbeitskammern zu Lasten des Arbeitskammervolumens der anderen der Arbeitskammern und gleichzeitiger Verstellung der Nockenwelle relativ zu ihrem Antrieb, dadurch gekennzeichnet, daß wenigstens eine zusätzliche Arbeitskammer (6.1, 6.2) vorgesehen ist mit ebenfalls jeweils zwei relativ zueinander bewegbaren Wänden (23) von denen jeweils die eine der Wände mit dem Antriebselement (3) der Nockenwelle und die andere der Wände mit der Nockenwelle (4) verbunden sind und die zusätzliche Arbeitskammer (6.1, 6.2) ständig mit einer Druckkammer (11) einer von Antrieb der Nockenwelle angetriebenen zusätzlichen Pumpe verbunden ist und mit einem zusätzlichen Steuerventil (21), durch das die Druckkammer (11) der zusätzlichen Pumpe von einer Druckmittelzufuhr getrennt oder mit dieser verbunden wird zur Erzeugung eines die Verstellung durch die Arbeitskammern unterstützenden Druck in der zusätzlichen Arbeitskammer (6.1, 6.2) oder zu deren Entlastung.

2. Verstelleinrichtung nach Anspruch 1, **dadurch gekennzeichnet**, daß die Arbeitskammern im Wirkbereich eines Antriebsrads (3) für die Nockenwelle (4) angeordnet sind, die als Freiräume zwischen abwechselnd an der Innenseite des Nockenwellenantriebsrades (3) und der Außenseite des Drehkolben (22) des Stellmotors (2) angeordneten Verstellsegmenten (23) vorgesehen sind.

3. Verstelleinrichtung nach einem der vorangehenden Ansprüche, **dadurch gekennzeichnet**, daß das Steuerventil (20) für die zusätzliche Pumpe (1) und das Steuerventil (21) für den Stellmotor (2) mit einem gemeinsamen Magneten (18) eine Steuereinheit (19) bilden.

4. Verstelleinrichtung nach einem der vorhergehenden Ansprüche, **dadurch gekennzeichnet**, daß die zusätzliche Pumpe (1) als symmetrische, zweizylindrige Kugelkolbenpumpe mit Doppelhubkurve ausgebildet ist.

5. Verstelleinrichtung nach Anspruch 4, **dadurch gekennzeichnet**, daß die Hubkurve (27) des Hubringes (26) der zusätzlichen Pumpe (1) oval, elliptisch, trochoidförmig oder entsprechend der Form einer Sinusquadratfunktion ausgestaltet ist.

6. Verstelleinrichtung nach einem der vorhergehenden Ansprüche, **dadurch gekennzeichnet**, daß zwei Arbeitskammern (6.1, 6.2) des Stellmotors (2) einerseits jeweils mit den Druckkammern (11) der zusätzlichen Pumpe (1) über eine Leitung (5) verbunden und andererseits über eine Leitung (12) mittels des ersten Steuerventils (20) an den Schmiermittelkreislauf (14) der Verbrennungskraftmaschine angeschlossen sind.

7. Verstelleinrichtung nach Anspruch 6, **dadurch gekennzeichnet**, daß die beiden Arbeitskammern (6.1, 6.2) im Stellmotor (2) einander diametral gegenüberliegend angeordnet sind.

8. Verstelleinrichtung nach einem der vorhergehenden Ansprüche, **dadurch gekennzeichnet**, daß zwei Arbeitskammern (7.1, 7.2) belüftet sind und einander diametral gegenüberliegend jeweils neben einer der Arbeitskammern (6.1, 6.2), die mit den Druckkammern (11) der zusätzlichen Pumpe (1) verbunden sind, anfgeordnet sind.

9. Verstelleinrichtung nach einem der vorhergehenden Ansprüche, **dadurch gekennzeichnet**, daß vier Arbeitskammern zu je zwei Kammerpaaren (8.1, 8.2) und (9.1, 9.2) hydraulisch zusammengefaßt sind, die einander diametral gegenüberliegen und jeweils zwischen einer der belüfteten Arbeitskammern (7.1, 7.2) und einer der mit der Druckkammer (11) der zusätzlichen Pumpe (1) verbundenen Arbeitskammern (6.1, 6.2) angeordnet sind.

10. Verstelleinrichtung nach Anspruch 9, **dadurch gekennzeichnet**, daß die beiden nebeneinander angeordneten Arbeitskammern der einzelnen Kammerpaare (8.1, 8.2 bzw. 9.1, 9.2) jeweils durch eine Verbindungsleitung (13, 17), die absperrbar ausgebildet ist, miteinander verbunden sind.

11. Verstelleinrichtung nach einem der vorhergehenden Ansprüche, **dadurch gekennzeichnet**, daß die Durchflußsteuerung der Verbindungsleitungen (13 und 17) zwischen den Kammern der Arbeitskammerpaare (8.1, 8.2) und (9.1, 9.2) sowie die Steuerung des Anschlusses der Druckkammern (11) der zusätzlichen Pumpe (1) und der entsprechenden Arbeitskammern (6.1, 6.2) des Stellmotors (2) an den Schmiermittelkreislauf der Verbrennungskraftmaschine (14) über die Leitungen (12) durch eine gemeinsame Steuereinheit (19) kontrolliert ist.

12. Verstelleinrichtung nach Anspruch 11, **dadurch gekennzeichnet**, daß die Druckkammern (11) der zusätzlichen Pumpe (1) mit dem Schmiermittelkreislauf der Verbrennungskraftmaschine (14) immer dann verbunden sind, wenn die Verbindungsleitungen (13, 17) zwischen den einzelnen Kammern der Arbeitskammerpaare (8.1, 8.2) und (9.1, 9.2) des Stellmotors (2) gesperrt sind.

13. Verstelleinrichtung nach einem der vorhergehenden Ansprüche, **dadurch gekennzeichnet,** daß für die zusätzliche Pumpe (1) und die den Verstellvorgang bewirkenden Arbeitskammern (6.1, 6.2, 8.1, 8.2, 9.1, 9.2) des Stellmotors (2) als hydraulisches Arbeitsmedium das Schmiermittel des Schmiermittelkreislaufs der Verbrennungskraftmaschine (14) wirkt.

## Claims

1. Adjustment device for the continuous adjustment of the angular relationship of a camshaft (4) used for actuating gas exchange valves of an internal combustion engine relative to its drive element (3), having a servomotor which has at least one pair of working chambers (8.1, 8.2, 9.1, 9.2) filled with hydraulic medium and each having two walls (23) which can be moved relative to one another and of which one in each case is connected to the drive element (3) of the camshaft and the other is connected to the camshaft (4) and the working chambers are connected selectively to one another by means of a control valve (21) in such a way that, using directional torques acting on the camshaft in one direction or an opposite direction, the working chambers (8.1 and 8.2; 9.1 and 9.2) are connected to one another to enlarge the working-chamber volume of one of the working chambers at the expense of the working-chamber volume of the other of the working chambers and simultaneously adjust the camshaft relative to its drive, characterized in that at least one additional working chamber (6.1, 6.2) is provided, the said working chamber likewise having in each case two walls (23) which can be moved relative to one another and of which in each case one is connected to the drive element (3) of the camshaft and the other is connected to the camshaft (4) and the additional working chamber (6.1, 6.2) is connected continuously to a pressure chamber (11) of an additional pump driven by the drive of the camshaft, and with an additional control valve (21) by which the pressure chamber (11) of the additional pump is separated from a pressure-medium supply or connected to the latter to produce a pressure in the additional working chamber (6.1, 6.2) which assists the adjustment by means of the working chambers or to relieve the said pressure.

2. Adjustment device according to Claim 1, characterized in that the working chambers are arranged in the action region of a drive wheel (3) for the camshaft (4), which working chambers are provided as free spaces between adjusting segments (23) alternately located on the inside of the camshaft drive wheel (3) and the outside of the rotary piston (22) of the servomotor (2).

3. Adjustment device according to one of the preceding claims, characterized in that the control valve (20) for the additional pump (1) and the control valve (21) for the servomotor (2) form, together with a common magnet (18), a control unit (19).

4. Adjustment device according to one of the preceding claims, characterized in that the additional pump (1) is configured as a symmetrical, two-cylinder ball pump with double cam.

5. Adjustment device according to Claim 4, characterized in that the cam (27) of the cam ring (26) of the additional pump (1) is embodied as oval, elliptical, trochoidal or corresponding to the shape of a sine squared function.

6. Adjustment device according to one of the preceding claims, characterized in that two working chambers (6.1, 6.2) of the servomotor (2) are respectively connected, on the one hand, to the pressure chambers (11) of the additional pump (1) via a conduit (5) and are connected, on the other hand, to the lubricant circuit (14) of the internal combustion engine via a conduit (12) by means of the first control valve (20).

7. Adjustment device according to Claim 6, characterized in that the two working chambers (6.1, 6.2) in the servomotor (2) are arranged to be diametrically opposite to one another.

8. Adjustment device according to one of the preceding claims, characterized in that two working chambers (7.1, 7.2) are vented and are arranged diametrically opposite to one another, in each case adjacent to one of the working chambers (6.1, 6.2) which are connected to the pressure chambers (11) of the additional pump (1).

9. Adjustment device according to one of the preceding claims, characterized in that four working chambers are hydraulically associated to form two respective chamber pairs (8.1, 8.2) and (9.1, 9.2) which are diametrically opposite to one another and are arranged, in each case, between one of the vented working chambers (7.1, 7.2) and one of the working chambers (6.1, 6.2) connected to the pressure chamber (11) of the additional pump (1).

10. Adjustment device according to Claim 9, characterized in that the two working chambers, arranged adjacent to one another, of the individual chamber pairs (8.1., 8.2 and 9.1, 9.2) are respectively connected to one another by means of a connecting conduit (13, 17) which is configured so that it can be shut off.

11. Adjustment device according to one of the preceding claims, characterized in that the through-flow control of the connecting conduits (13 and 17) between the chambers of the working chamber pairs (8.1, 8.2) and (9.1, 9.2) and the control of the connection of the pressure chambers (11) of the additional pump (1) and the corresponding working chambers (6.1, 6.2) of the servomotor (2) to the lubricant circuit of the internal combustion engine (14) via the conduits (12) is controlled by a common control unit (19).

12. Adjustment device according to Claim 11, characterized in that the pressure chambers (11) of the additional pump (1) are connected to the lubricant circuit of the internal combustion engine (14) whenever the connecting conduits (13, 17) between the individual chambers of the working chamber pairs (8.1, 8.2) and (9.1, 9.2) of the servomotor (2) are shut off.

13. Adjustment device according to one of the preceding claims, characterized in that the lubricant of the lubricant circuit of the internal combustion engine (14) acts as the hydraulic working medium for the additional pump (1) and the working chambers 6.2, 8.1, 8.2, 9.1, 9.2), of the servomotor (2) effecting the adjustment procedure.

## Revendications

1. Dispositif de réglage pour le réglage en continu de l'angle de rotation d'un arbre à cames (4) commandant les soupapes d'échange de gaz d'un moteur à combustion interne par rapport à un élément d'entraînement (3), comprenant un moteur de réglage composé d'au moins une paire de chambres de travail (8.1, 8.2, 9.1, 9.2) remplies d'un fluide hydraulique, avec chaque fois deux parois (23) mobiles l'une par rapport à l'autre, dont l'une est reliée à l'élément d'entraînement (3) de l'arbre à cames et l'autre à l'arbre à cames (4) et les chambres de travail sont reliées sélectivement par une soupape de commande (21) de façon qu'en utilisant la sollicitation du couple, dirigé, de l'arbre à cames dans une direction ou dans la direction opposée, on relie les chambres de travail (8.1 et 8.2 ou 9.1 et 9.2) pour augmenter le volume de l'une des chambres au détriment du volume de l'autre chambre et règle simultanément l'arbre à cames par rapport à son moyen d'entraînement, dispositif caractérisé par au moins une chambre de travail supplémentaire (6.1, 6.2) avec chaque fois deux parois (23) mobiles l'une par rapport à l'autre dont l'une est reliée à l'élément d'entraînement (3) de l'arbre à cames et l'autre à l'arbre à cames (4), et la chambre de travail supplémentaire (6.1, 6.2) est reliée en permanence à une chambre de pression (11) d'une pompe supplémentaire entraînée par le moyen d'entraînement de l'arbre à cames, ainsi qu'une soupape de commande (21) supplémentaire à travers laquelle la pompe supplémentaire est séparée ou est reliée à une alimentation en liquide sous pression pour créer une pression dans la chambre de travail supplémentaire (6.1, 6.2) ou évacuer la pression, pour soutenir le réglage par les chambres de travail.

2. Dispositif de réglage selon la revendication 1, caractérisé en ce que les chambres de travail sont prévues dans la plage d'action d'une roue d'entraînement (3) des arbres à cames (4), ces chambres étant les espaces libres entre des segments de réglage (23) prévus alternativement sur la face intérieure de la roue d'entraînement (3) de l'arbre à cames et la face extérieure du piston tournant (22) du moteur de réglage.

3. Dispositif de réglage selon l'une des revendications précédentes, caractérisé en ce que la soupape de commande (20) de la pompe supplémentaire (1) et la soupape de commande (21) du moteur de réglage (2) forment une unité de commande (19) avec un électro-aimant (18) commun.

4. Dispositif de réglage selon l'une des revendications précédentes, caractérisé en ce que la pompe supplémentaire (1) est une pompe à pistons sphériques à deux cylindres, symétriques, à double courbe formant came.

5. Dispositif de réglage selon la revendication 4, caractérisé en ce que la courbe de relevage (27) de la bague formant came (26) de la pompe supplémentaire (1) est une forme ovale, elliptique, de forme trochoïdale ou selon une forme de sinus au carré.

6. Installation de réglage selon l'une des revendications précédentes, caractérisée par deux chambres de travail (6.1, 6.2) du moteur de réglage (2) reliées d'une part aux chambres de pression (11) de la pompe supplémentaire (1) à une conduite (5) et d'autre part par une conduite (12) à l'aide de la première soupape de commande (20) au circuit de liquide de graissage (14) du moteur à combustion interne.

7. Dispositif de réglage selon la revendication 6, caractérisé en ce que les deux chambres de travail (6.1, 6.2) sont prévues dans des positions diamétralement opposées dans le moteur de réglage (2).

8. Dispositif de réglage selon l'une des revendications précédentes, caractérisé en ce que deux chambres de travail (7.1, 7.2) sont ventilées et prévues de manière diamétralement opposée, chaque fois à côté de l'une des chambres de travail (6.1, 6.2) elles-mêmes reliées aux chambres de pression (11) de la pompe supplémentaire (1).

9. Dispositif de réglage selon l'une des revendications précédentes, caractérisé en ce que quatre chambres de travail sont réunies hydrauliquement en deux paires de chambres (8.1, 8.2 ; 9.1, 9.2) diamétralement opposées et ayant chaque fois entre elles l'une des chambres de travail ventilées (7.1, 7.2) et l'une des chambres de travail (6.1, 6.2) reliées à la chambre de pression (11) de la pompe supplémentaire (1).

10. Dispositif de réglage selon la revendication 9, caractérisé en ce que les deux chambres de travail juxtaposées des différentes paires de chambres (8.1, 8.2 ; 9.1, 9.2) sont reliées chaque fois par une conduite de liaison (13, 17) et ces conduites peuvent être coupées.

11. Dispositif de réglage selon l'une des revendications précédentes, caractérisé en ce que la commande d'ouverture des conduites de liaison (13 et 17) entre les chambres des paires de chambres de travail (8.1, 8.2 et 9.1, 9.2) ainsi que la commande du branchement des chambres de pression (11) de la pompe supplémentaire (1) et des chambres de travail correspondantes (6.1, 6.2) du moteur de réglage (2) sur le circuit de graissage du moteur à combustion interne (14) sont contrôlées par les conduites (12), par une unité de commande commune (19).

12. Dispositif de réglage selon la revendication 11, caractérisé en ce que les chambres de pression (11) de la pompe supplémentaire (1) sont reliées au circuit de liquide de graissage du moteur à combustion interne (14) toujours lorsque les conduites de liaison (13, 14) entre les différentes chambres des paires de chambres (8.1, 8.2 et 9.1; 9.2) du moteur de réglage (2) sont coupées.

13. Dispositif de réglage selon l'une des revendications précédentes, caractérisé en ce que pour la pompe supplémentaire (1) et des chambres de travail (6.1, 6.2 ; 8.1, 8.2 ; 9.1, 9.2) qui assurent l'opération de réglage, dans le moteur de réglage (2), le fluide travail hydraulique est l'agent de graissage du circuit de graissage du moteur à combustion interne (14).
